# EUROPÄISCHE PATENTSCHRIFT

(11) **EP 4 234 456 B1**
(45) Veröffentlichungstag und Bekanntmachung des Hinweises auf die Patenterteilung: **24.07.2024**
(21) Anmeldenummer: 22158851.0
(22) Anmeldetag: 25.02.2022
(51) Int. Cl.: B65G 47/96, B07C 5/04, B07C 5/10, B07C 5/16, B07C 5/34, B65G 69/16, B07C 3/00

(54) **VERFAHREN FÜR DIE KATEGORISIERUNG VON PAKETEN ZUR BELADUNG EINER ENDSTELLE**
METHOD FOR CATEGORIZING PACKETS FOR LOADING A TERMINAL
PROCÉDÉ DE CLASSIFICATION DES PAQUETS DESTINÉS AU CHARGEMENT D'UN TERMINAL

(43) Veröffentlichungstag der Anmeldung: 30.08.2023
(73) Patentinhaber: BEUMER Group GmbH & Co. KG, 59269 Beckum (DE)
(72) Erfinder: SCHULENBERG, Martin, 59609 Anröchte (DE); RADNER, Frederik, 59302 Oelde (DE)
(74) Vertreter: Angerhausen, Christoph

(56) Entgegenhaltungen:
- WO-A2-2019/169418
- US-A1- 2020 065 758
- US-A1- 2021 245 204

## Beschreibung

Die Erfindung betrifft ein Verfahren für die Kategorisierung von Paketen zur Beladung einer Endstelle, beispielsweise eines Speditionsbehälters. Ein derartiges Verfahren mit den Merkmalen des Oberbegriffs des Patentanspruchs 1 ist aus der EP 2 686 260 B1 bekannt.

Im Kurier-Express-Paket (KEP)-Bereich haben sich überregionale Paketzentren durchgesetzt, in welche Paketsendungen aus einer Vielzahl dem betreffenden Paketzentrum zugeordneter Filialen eingeliefert und für den Weitertransport, etwa an regionale Verteilzentren, sortiert werden. Für die Sortierung haben sich Sorter unterschiedlicher Bauart etabliert, beispielsweise sogenannte Quergurtsorter (Cross-Belt-Sorter), in welche die zu sortierenden Pakete eingespeist und beispielsweise entsprechend ihrer Zieladresse oder eines anderen Sortierkriteriums entweder unmittelbar in entsprechende Speditionsbehälter sortiert oder vor dem Beladen des Speditionsbehälters in Endstellen, beispielsweise Sortierendstellen, gepuffert werden. Ein entsprechender Quergurtsorter ist aus der EP 2 297 010 B1 bekannt. US202145204 offenbart den Oberbegriff des Anspruchs 1.

Die zu transportierenden Pakete unterscheiden sich mitunter ganz erheblich hinsichtlich ihrer Abmessungen, ihres Volumens, ihres Gewichts sowie anderer physikalischer Eigenschaften voneinander. Obwohl es zum Stand der Technik gehört, die zu sortierenden Pakete bereits auf dem zuvor erwähnten Sorter hinsichtlich der genannten Eigenschaften zu vermessen, ist die Befüllung der Speditionsbehälter immer noch mit erheblichen Unsicherheiten verbunden. Beispielsweise kann bei dem Beladen des Speditionsbehälters mit einem sperrigen Paket das Paket so ungünstig in den Speditionsbehälter fallen, dass es in dem Speditionsbehälter verkantet oder zumindest ein Volumen blockiert, welches über sein eigenes Volumen um ein Vielfaches hinausgeht. Es ist somit nicht vorhersehbar, welche Anzahl bzw. welches Volumen einzelner Pakete in dem Speditionsbehälter für eine optimale, zumindest annähernd 100%-ige Befüllung untergebracht werden kann, wenn diese einzeln oder im Pulk in den Speditionsbehälter geladen werden. Dies führt dazu, dass die Speditionsbehälter entweder versehentlich überladen werden oder aufgrund der Berücksichtigung eines Puffers zur Vermeidung der Überladung häufig eine nur unvollständige Befüllung aufweisen.

Darüber hinaus können bereits beschädigte oder aufgrund ihrer Verpackung oder sonstigen äußeren Beschaffenheit leicht zu beschädigende Pakete aufgrund der im Vergleich zur Höhe geringen Grundfläche der Speditionsbehälter weiteren Schaden nehmen, wenn diese beispielsweise frühzeitig in den Speditionsbehälter eingefüllt und damit weiter unten im Speditionsbehälter liegen, so dass noch viele Lagen gegebenenfalls schwerer Pakete auf das beschädigte oder leicht zu beschädigende Paket aufgeladen werden.

Es ist daher die Aufgabe der Erfindung, ein Verfahren für die Beladung einer Endstelle mit Paketen vorzuschlagen, welches einerseits eine effektive Ausnutzung des Aufnahmevolumens der Endstelle erlaubt und vorzugsweise weiterhin dazu eingerichtet ist, Pakete vor Beschädigung beim Beladen der Endstelle zu schützen.

Diese Aufgabe wird durch ein Verfahren mit den Merkmalen des Anspruchs 1 gelöst. Vorteilhafte Ausführungsformen der Erfindung sind Gegenstand der jeweils abhängigen Ansprüche.

Demgemäß ist vorgesehen, dass bei dem Kategorisieren ein von der objektspezifischen Information oder von einer weiteren objektspezifischen Information des jeweiligen Pakets abhängiger Gewichtungsfaktor bestimmt wird, mit dem die objektspezifische Information beaufschlagt wird, wobei eine gewichtete objektspezifische Information des jeweiligen Pakets erhalten wird.

Das Erfassen der mindestens einen objektspezifischen Information kann das Erfassen eines Volumens, einer Form, oder eines Gewichts und mindestens einer weiteren objektspezifischen Information des jeweiligen Pakets aufweisen. Dann kann bei dem Kategorisieren aus der mindestens einen weiteren objektspezifischen Information mindestens ein Gewichtungsfaktor bestimmt, mit dem das Volumen, die Form, oder das Gewicht beaufschlagt wird, wobei ein gewichtetes Volumen, eine gewichtete Form oder ein gewichtetes Gewicht des jeweiligen Pakets erhalten wird.

Für die Optimierung der Beladung des Speditionsbehälters kann somit bei einer Ausführungsform der Erfindung ein erwartetes Packungsvolumen des Pakets berücksichtigt werden, welches das Paket einnimmt, wenn es in den Speditionsbehälter verladen ist. Dieses erwartete Packungsvolumen kann von diversen Eigenschaften des Pakets und auch umliegender Pakete abhängen. Beispielsweise kann eine herabgesetzte mechanische Festigkeit des Pakets zu einer Komprimierung des Pakets führen, wenn das Paket weiter unten in der Endstelle angeordnet ist und von darüber liegenden Paketen und deren Gewicht komprimiert wird. Darüber hinaus können die Abmessungen eines Pakets einen Hinweis darauf geben, wie viel Volumen das Paket in der Endstelle, etwa in einem Speditionsbehälter, z. B. in einem Rollbehälter, voraussichtlich einnimmt, insbesondere das über sein Eigenvolumen hinausgehende Volumen, welches zum Beispiel aufgrund einer stark von der Kubusform abweichenden Geometrie deutlich erhöht sein kann. Insbesondere vergleichsweise längliche und damit sperrige Objekte höher Festigkeit, etwa in Kartonage verpackte Pakete, können in dem in die Endstelle verladenen Zustand ein Volumen belegen, welches ein Vielfaches des Eigenvolumens beträgt. Insbesondere können auch mehrere der vorgenannten objektspezifischen Informationen bei dem Kategorisieren und der Bestimmung des mindestens einen Gewichtungsfaktors berücksichtigt werden.

Die Endstelle im Sinne der Erfindung ist auf keine besonderen Ausführungsformen beschränkt. Eine Endstelle im Sinne der Erfindung kann beispielsweise eine Sortierendstelle sein, die dazu eingerichtet ist, auf einen Speditionsbehälter, beispielsweise einen Rollbehälter, umgeladen zu werden. Eine Endstelle im Sinne der Erfindung kann jedoch auch der bereits erwähnte Speditionsbehälter bzw. ein Rollbehälter sein. Wenn im folgenden Bezug genommen wird auf eine Endstelle, eine Sortierendstelle, einen Speditionsbehälter, einen Rollbehälter oder dergleichen, soll jeweils jede der genannten Ausführungsformen umfasst sein.

Das Kategorisieren kann das Sortieren der Pakete auf eine von mindestens zwei voneinander getrennten Sortierendstelle aufweisen, die in einer Beladereihenfolge in den Speditionsbehälter umgeladen werden. Die Sortierendstellen können als Zwischenpuffer verwendet werden, um die Pakete vor dem Verladen in den Speditionsbehälter nach zumindest einem Sortierkriterium voneinander zu separieren. Das Sortierkriterium kann ein aus der objektspezifischen Information und vorzugsweise aus der mindestens einen weiteren objektspezifischen Information abgeleitetes Sortierkriterium sein. Beispielsweise können leichte von schweren Paketen separiert werden. Alternativ oder zusätzlich können große von kleinen Paketen separiert werden. Weiterhin alternativ können feste von komprimierbaren Paketen separiert werden. Es können jeweils Wertebereiche für die vorgenannten Sortierkriterien festgelegt werden.

Das Umladen der Pakete kann das Ausschleusen der Pakete aus mindestens einer der Sortierendstellen auf einen Abzugsförderer aufweisen, der zwischen den Sortierendstellen und einer Beladestation für Speditionsbehälter geführt ist. Alternativ können die Sortierendstellen unmittelbar in den Speditionsbehälter verladen werden. Beispielsweise können die Sortierendstellen durch Auskippen in den Speditionsbehälter entleert werden.

Die mindestens zwei Sortierendstellen können in der Beladereihenfolge in den Speditionsbehälter umgeladen werden, nachdem die Summe der gewichteten Volumina der auf die Sortierendstellen sortierten Pakete ein Aufnahmevolumen des Speditionsbehälters erreicht hat. Alternativ kann vorgesehen sein, dass vor den Umladen der Sortierendstellen in den Speditionsbehälter die Summe der gewichteten Volumina das Aufnahmevolumen des Speditionsbehälters übersteigt. Dies kann beispielsweise dann zweckmäßig sein, wenn infolge des Umladens der Sortierendstellen in den Speditionsbehälter zu erwarten ist, dass eine zusätzliche Komprimierung weicher Pakete, etwa von Folienbeuteln, erfolgt. Dies kann beispielweise dann der Fall sein, wenn feste von komprimierbaren Paketen über die Sortierendstellen voneinander separiert werden und gleichzeitig erfasst wird, dass mit dem Erreichen des Aufnahmevolumens des Speditionsbehälters die festen Objekte im Übrigen ein aufsummiertes Gewicht aufweisen, welches zu einer zusätzlichen Komprimierung der weichen Pakete führt, wenn letztere als erstes in den Speditionsbehälter und anschließend die schweren, festen Objekte auf die weichen Objekte geladen werden.

Wenn jedoch die Vermeidung von Beschädigungen Priorität hat, kann alternativ vorgesehen sein, dass die weichen Objekte auf die schweren, festen Objekte geladen werden, wobei die bei der zuvor beschriebenen Variante erreichte Erhöhung des Fassungsvermögens des Speditionsbehälters aufgrund der Komprimierung der weichen Objekte nicht erreicht wird. Andererseits kann eine Erhöhung des Fassungsvermögen bei der Beladung der weichen Objekte auf die schweren, festen Objekte dadurch erreicht werden, dass die weichen Objekte aufgrund ihrer vergleichsweise höheren Flexibilität in Zwischenräume zwischen den schweren, festen Objekten eindringen und damit Leerstellen zwischen den schweren, festen Objekten besetzen.

Das Erfassen der mindestens einen objektspezifischen Information kann das Erzeugen eines Abbilds des Pakets aufweisen. Dabei kann das Kategorisieren das Abgleichen des erzeugten Abbilds mit Bildern in einer Datenbank aufweisen, denen jeweils mindestens eine Kategorie zugeordnet ist. Bei dem Abgleichen des Abbilds mit den Bildern in der Datenbank kann dasjenige Bild in der Datenbank ermittelt werden, zwischen dem im Vergleich zu dem Abbild die geringste Abweichung besteht. Die Bestimmung der Abweichung kann beispielsweise das Abgleichen eines Abstands zwischen einer Oberfläche eines Füllvolumens in dem Speditionsbehälter und einer Oberkante des Speditionsbehälters aufweisen.

Das Verfahren kann weiterhin das Hinterlegen des erzeugten Abbilds in der Datenbank aufweisen. Dabei kann dem Abbild wenigstens diejenige mindestens eine Kategorie zugeordnet werden, die bei dem Abgleichen demjenigen Bild in der Datenbank zugeordnet ist, welches eine geringste Abweichung zu dem Abbild aufweist.

Das Erfassen der mindestens einen objektspezifischen Information das Erfassen einer volumenunabänigigen objektspezifischen Information aufweisen, vorzugsweise das Erfassen eines Gewichts, einer Beschädigung, einer Form, einer Festigkeit, oder einer Gefahrenquelle. Das Bestimmen einer volumenunabhängigen, objektspezifischen Information kann beispielsweise dazu verwendet werden, um Pakete auszusondern, welche aufgrund der erfassten volumenunabhängigen, objektspezifischen Information entweder nicht für die Verladung in einen Speditionsbehälter geeignet sind, etwa weil sie eine Gefahrenquelle aufweisen oder beschädigt sind, oder die aufgrund einer sonstigen Eigenschaft dem der Erfindung zugrundeliegenden Ziel, eine möglichst effektive Auslastung des Speditionsbehälter zu erreichen, entgegenwirken, etwa Pakete, die ein Übermaß aufweisen, oder sperrig sind, oder für die automatisierte Beladung des Speditionsbehälters ungeeignet sind.

Weiterhin kann das Erfassen mindestens einer objektspezifischen Information das Erfassen mindestens einer mechanischen Eigenschaft für zumindest einen Teil der Vielzahl Pakete aufweisen, wobei das Kategorisieren zusätzlich anhand der mechanischen Eigenschaft erfolgt.

Für die Optimierung der Beladung des Speditionsbehälters kann somit weiterhin eine mechanischen objektspezifischen Eigenschaft der zu verladenden Pakete berücksichtigt werden. So kann beispielsweise vorgesehen sein, den Speditionsbehälter zunächst mit Folienbeuteln oder sonstigen weichen Verpackungseinheiten zu beladen, in der Annahme, dass diese bei der weiteren Beladung des Speditionsbehälters, beispielsweise mit Paketen, welche eine vergleichsweise härtere Karton-Umverpackung aufweisen und damit bei Transport nicht komprimiert werden sollen, weiter komprimiert werden und damit eine bessere Ausnutzung des Fassungsvolumens des Speditionsbehälters für die Aufnahme zusätzlicher Pakete zur Verfügung steht. Grundsätzlich besteht jedoch ein Zielkonflikt dahingehend, dass schwere Pakete als zwar zu der Verdichtung der weichen Pakete führen, jedoch potentiell zu größeren Beschädigungen der weichen Pakete führen.

Das Kategorisieren kann demgemäß bei einer Ausführungsform dazu eingerichtet sein, Pakete, beispielsweise weiche Pakete, die potenziell einer Beschädigung beim Verladen in die Endstelle bzw. den Speditionsbehälter ausgesetzt sein könnten, von demgegenüber robusteren Paketen, beispielsweise in Kartons verpackten Paketen, zu separieren. Dadurch können die Pakete in einer bevorzugten Reihenfolge in die Endstelle bzw. den Speditionsbehälter geladen werden, wobei vorzugsweise die bei dem Kategorisieren als leicht zu beschädigende Pakete erkannten Pakete nach den übrigen Paketen, insbesondere robusten Paketen, in die Endstelle bzw. den Speditionsbehälter geladen werden.

Alternativ oder zusätzlich kann die Erfassung der mechanischen Eigenschaft auch die Erfassung einer Beschädigung des Pakets bzw. einer Umverpackung des Pakets umfassen, sodass die beschädigten Pakete zuletzt in den Speditionsbehälter gefüllt und damit von der gewichtsbedingten Belastung darüber liegender Pakete verschont bleiben.

So kann bei dem Kategorisieren der Pakete beispielsweise eine Kategorie beschädigter Pakete und/oder eine Kategorie weicher, komprimierbarer Pakete und/oder eine Kategorie in rechteckigen Kartons verpackter Pakete für die Priorisierung der Pakete vorgesehen sein.

Das Bestimmen einer Beladereihenfolge kann darauf ausgerichtet sein, in Abhängigkeit der mit der Kategorie verknüpften mechanischen Eigenschaften eine geeignete Reihenfolge der Beladung der Pakete in den Speditionsbehälter zu bestimmen, welche eine möglichst vollständige Beladung der zuvor den Kategorien zugeordneten Pakete in den Speditionsbehälter verspricht.

Optional können die Pakete derselben Kategorie nach dem Kategorisieren und vor dem Beladen des Speditionsbehälters in jeweils einer Sortierendstelle zwischengelagert werden. Alternativ können die Pakete auf dem Sorter gepuffert werden, bis auf dem Sorter eine Kombination von Paketen der unterschiedlichen Kategorien ermittelt und kategorisiert worden ist, welche bei Berücksichtigung der bestimmten Beladereihenfolge eine möglichst effiziente, d.h. vorzugsweise eine möglichst vollständige Befüllung des Speditionsbehälters versprechen.

Das Erfassen der mindestens einen mechanischen Eigenschaft kann das Erfassen der Festigkeit und/oder der Vollständigkeit des Pakets bzw. einer Verpackung des Pakets aufweisen. Dies kann das Erfassen von Rissen und/oder anderen Unregelmäßigkeiten oder Beschädigungen einer Verpackung des betreffenden Pakets aufweisen.

Die Pakete können für das Erfassen der mindestens einen objektspezifischen Information in einen Umlaufsorter eingespeist werden, vorzugsweise in einen Liegesorter, einen Taschensorter oder einen kombinierten Liege- und Taschensorter, wobei das Erfassen der mindestens einen objektspezifischen Information erfolgt, während die Pakete in dem Umlaufsorter transportiert werden. Das Erfassen der objektspezifischen Information kann auch außerhalb des Umlaufsorters erfolgen, beispielsweise bei der Einschleusung in den Umlaufsorter. Die objektspezifischen Informationen können auch Artikelstammdaten sein oder aufweisen.

Das Erfassen der mindestens einen mechanischen Eigenschaft erfolgt vorzugsweise berührungsfrei, besonders bevorzugt optisch und in einer ganz besonders bevorzugten Ausführungsform kamerabasiert und mithilfe digitaler Bildverarbeitung, beispielsweise umfassend eine Kantenerkennung. Beispielsweise kann mit einer ausreichend hohen Treffsicherheit anhand der Geometrie des Paketes auf die Festigkeit des Pakets bzw. einer Umverpackung des Pakets geschlossen werden. Beispielsweise weisen im Vergleich zu Folienbeuteln festere Kartons eine im Wesentlichen quaderförmige Geometrie auf, während weichere Pakete, wie die bereits erwähnten Folienbeutel, eine polyedrische Geometrie aufweisen, welche, beispielsweise kamerabasiert, mit Hilfe von im Stand der Technik geläufiger Bildverarbeitungsverfahren leicht zu unterscheiden sind.

Das Kategorisieren kann das Ausschleusen der Pakete in jeweils eine einer Mehrzahl Sortierendstellen aufweisen, wobei jeder Sortierendstelle eine der Kategorien zugeordnet ist. Dabei kann das Beladen des Speditionsbehälters das Entleeren der Sortierendstellen in der Beladereihenfolge in den Speditionsbehälter aufweisen.

Das Erfassen der mindestens einen mechanischen Eigenschaft kann das Erfassen einer jeweiligen Festigkeit der Vielzahl Pakete oder einer jeweiligen äußeren Hülle oder Umverpackung der Vielzahl Pakete aufweisen, wobei die Pakete bei dem Kategorisieren in jeweils eine aus mindestens zwei Kategorien unterschiedlicher Festigkeitsbereiche eingeteilt werden.

Bei dem Erfassen der mindestens einen mechanischen Eigenschaft kann erfasst werden, ob das jeweilige Paket eine reversibel verformbare Umverpackung aufweist, oder nicht. Bei dem Kategorisieren können die Pakete in Pakete mit reversibel verformbarer Umverpackung und solche ohne reversibel verformbare Umverpackung eingeteilt werden.

Bei dem Erfassen der mindestens einen objektspezifischen Information kann für zumindest einen Teil der Pakete der Vielzahl Pakete mindestens eine weitere Eigenschaft aus der Gruppe Gewicht, Volumen und Abmessungen erfasst werden. Beispielsweise kann bei dem Kategorisieren den Paketen, die der Kategorie der Pakete ohne reversibel verformbare Umverpackung zugeordnet worden sind, aus dem Volumen und dem Gewicht eine mittlere Dichte zugeordnet werden, welche dazu herangezogen werden kann, eine erwartete Komprimierung der Pakete, die bei dem Kategorisieren der Kategorie reversibel verformbarer Pakete zugeordnet wurden, abzuleiten, wenn bei dem Beladen des Speditionsbehälters in der Beladereihenfolge zunächst die reversibel verformbaren Pakete in den Speditionsbehälter gefüllt und daraufhin die Pakete ohne reversibel verformbare Umverpackung auf die verformbaren Pakete aufgeladen werden.

Die mindestens eine weitere Eigenschaft aus der Gruppe Gewicht, Volumen und Abmessungen kann zumindest für diejenigen Pakete der Vielzahl Pakete erfasst werden, für die bei dem Erfassen der mindestens einen mechanischen Eigenschaft die Festigkeit ihrer jeweiligen äußeren Hülle oder Umverpackung erfasst worden ist. Die Pakete können bei dem Kategorisieren in jeweils eine aus mindestens zwei Kategorien unterschiedlicher Festigkeitsbereiche eingeteilt werden.

Bei dem Beladen des Speditionsbehälters können die Pakete der Kategorie eines ersten Festigkeitsbereichs vor den Paketen der Kategorie eines gegenüber dem ersten Festigkeitsbereich höheren zweiten Festigkeitsbereichs in den Speditionsbehälter geladen werden. Dies erlaubt im Zuge der erwarteten Komprimierung der Pakete geringerer Festigkeit bei dem weiteren Beladen des Speditionsbehälters, beispielsweise auch mit Paketen höherer Festigkeit, die Beladung des Speditionsbehälters mit einer hinsichtlich Stückzahl und/oder Volumen größeren Menge Pakete. Wie oben bereits dargelegt wurde, kann die Bachladereihenfolge auch umgekehrt werden, wenn die bestmögliche Sicherstellung des beschädigungsfreien Transport der Pakete gegenüber einer maximalen Ausnutzung des belade Volumens des Speditionsbehälters priorisiert wird. Das erfindungsgemäße Kategorisieren ermöglicht es gerade, bei einer Ausführungsform, die zuvor beschriebene Reihenfolge prioritätsabhängig frei auszuwählen.

Vorzugsweise vor dem Beladen kann ein erstes Gesamtvolumen der Pakete der ersten Kategorie und ein zweites Gesamtvolumen der Pakete der zweiten Kategorie, die in der Beladereihenfolge in den Speditionsbehälter geladen werden, in Abhängigkeit einer erwarteten Komprimierung der Pakete der zweiten Kategorie bei dem Laden der Pakete der ersten Kategorie auf die Pakete der zweiten Kategorie ermittelt werden. Dies erlaubt es, dass bereits vor dem Beladen des Speditionsbehälters diejenige Kombination der zu verladenden Pakete einschließlich ihrer Beladereihenfolge bekannt ist, die bei Beladung des Speditionsbehälters unter Einhaltung der Beladereihenfolge eine möglichst optimale Ausnutzung des Aufnahmevolumens des Speditionsbehälters verspricht, beispielsweise weder eine Überfüllung noch eine Unterfüllung des Speditionsbehälters bedingt.

Das Verfahren kann vor dem Erfassen das Einschleusen der Vielzahl Pakete und vorzugsweise weiterer Pakete, die in einen anderen Speditionsbehälter geladen werden sollen, in den Sorter aufweisen, wobei die Pakete in dem Sorter gepuffert und erst dann in der Beladereihenfolge, vorzugsweise unmittelbar, in den Speditionsbehälter geladen werden, wenn das Beladen der Vielzahl Pakete die vollständige Beladung des Speditionsbehälters erwarten lässt. Bei dieser Ausführungsform kann auf die Verwendung von Sortierendstellen zur Pufferung der kategorisierten Pakete verzichtet werden. Stattdessen kann der Sorter selbst als Puffer verwendet werden. Alternativ oder zusätzlich kann für die Pufferung ein Taschensorter verwendet werden, in welchen die kategorisierten Pakete von dem Sorter, beispielsweise einem Quergurtsorter, auf den die Pakete vorher eingeschleust worden sind, ausgeschleust werden, um sie in der Beladereihenfolge aus einem Puffer des Taschensorters abzufragen, wenn der Speditionsbehälter in der Beladereihenfolge beladen werden soll.

Die vollständige Beladung des Speditionsbehälters kann dann erwartet werden, wenn die für das Beladen des Speditionsbehälters bestimmte Vielzahl Pakete unter Berücksichtigung einer erwarteten Packungsdichte bei der bestimmten Beladereihenfolge ein Füllvolumen aufweist, das einem Aufnahmevolumen des Speditionsbehälters entspricht oder zumindest nahekommt.

Vor dem Beladen des Speditionsbehälters kann ein Beladezustand erfasst werden, wobei vorzugsweise erfasst wird, ob der Speditionsbehälter leer ist. Auf diese Weise kann sichergestellt werden, dass in dem Speditionsbehälter vor dem Beladen nicht noch Pakete oder andere Sendungen enthalten sind, welche nicht zu der Charge derjenigen Pakete gehören, die im Folgenden in den Speditionsbehälter geladen werden.

Das Erfassen mindestens einer objektspezifischen Information kann das Erfassen einer Beschädigung mindestens eines der Pakete, vorzugsweise einer äußeren Hülle oder Umverpackung des Pakets, aufweisen. Dabei kann bei einer erfassten Beschädigung für mindestens eines der Pakete das betreffende Paket bei dem Kategorisieren einer Kategorie für beschädigte Pakete zugeordnet werden. Vorzugsweise werden die Pakete der Kategorie für beschädigte Pakete bei der Bestimmung der Beladereihenfolge einer Endposition in der Beladereihenfolge zugeordnet und damit zuletzt in den Speditionsbehälter geladen. Auf diese Weise kann sichergestellt werden, dass die beschädigten Pakete aufgrund weiterer Belastung und Komprimierung durch darüber liegende Pakete nicht weiter beschädigt werden.

Gemäß noch einer anderen Ausführungsform der Erfindung kann für das Bestimmen einer Beladereihenfolge zusätzlich oder alternativ zu den zuvor genannten Maßnahmen eine sensorische, beispielsweise eine optische Erfassung des Beladezustands mindestens einer Sortierendstelle erfolgen, in welche je Sortierendstelle jeweils Pakete derselben Kategorie vorsortiert sind. Dies kann beispielsweise kamerabasiert erfolgen. Beispielsweise kann das Packverhalten der in den Sortierendstellen gepufferten Pakete derselben Kategorie erfasst werden. Anhand des Packverhaltens, welches sich in der Sortierendstelle einstellt, kann auf das Packverhalten der betreffenden Pakete geschlossen werden, wenn diese bei dem Beladen des Speditionsbehälters von der Sortierendstelle in den Speditionsbehälter umgeladen werden. Alternativ kann die sensorische Erfassung des Beladezustands auch ausschließlich an einer finalen Endstelle, beispielsweise einem Speditionsbehälter, etwa einem Rollbehälters, erfolgen, um die Anzahl der Messpunkte und damit die technische Komplexität des Systems zu verringern.

Das Verfahren kann das kontinuierliche oder iterative Anpassen eines Algorithmus für das Kategorisieren der Pakete aufweisen. Dazu kann die bei dem Abgleichen erfasste geringste Abweichung durch Variieren des Gewichtungsfaktors und Verwenden eines dabei erhaltenen, variierten Gewichtungsfaktors bei einem weiteren Kategorisierungsschritt eines weiteren Pakets minimiert werden. Das Anpassen des Algorithmus für das Kategorisieren der Pakete erfolgt vorzugsweise mittels Maschine Learning.

Weitere Einzelheiten der Erfindung werden anhand der nachstehenden Figuren erläutert. Dabei zeigt:
- Figur 1: eine beispielhafte Ausführungsform eines Sorters;
- Figur 2: eine beispielhafte Ausführungsform eines Beladeturms für Speditionsbehälter; und
- Figur 3: eine beispielhafte Ausführungsform einer Anordnung zum Beladen eines Speditionsbehälters mit Paketen im schematischer Darstellung.

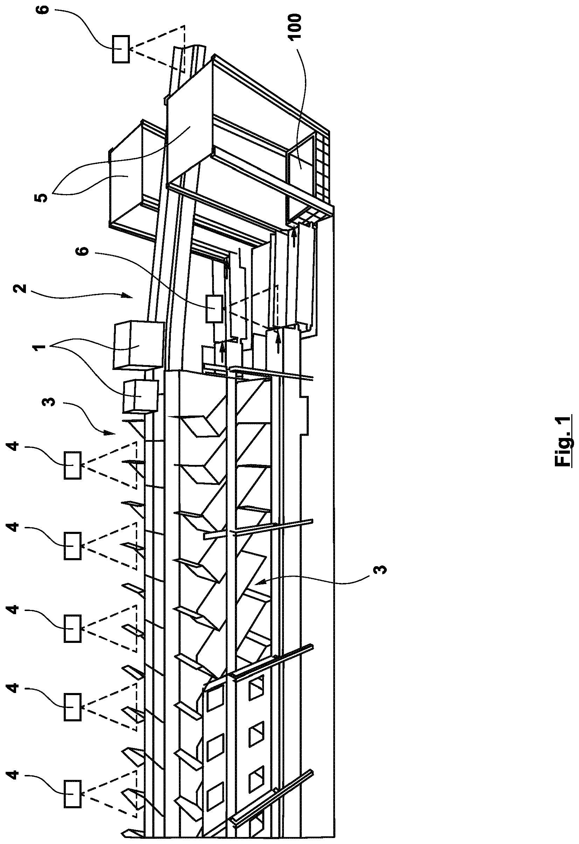

Die Figur 1 zeigt eine beispielhafte Ausführungsform eines Sorters 2 für die Ausführung des erfindungsgemäßen Verfahrens. Der Sorter 2 ist vorliegend als ein Quergurtsorter ausgeführt, der beispielsweise eine umlaufende Transportschleife bildet und mindestens eine Zuführung für zu sortierende Pakete 1 aufweist. Wie es grundsätzlich aus dem Stand der Technik bekannt ist, können die Pakte 1 auf dem Sorter 2 sensorisch erfasst und kategorisiert werden. Beispielsweise können neben Absender- und Adressdaten auch physikalische Eigenschaften des Pakets erfasst werden, beispielsweise Abmessungen und das Gewicht des Pakets 1. Bei einer Ausführungsform kann vorgesehen sein, dass noch auf dem Sorter 2 neben den bereits erwähnten objektspezifischen Informationen zusätzlich mindestens eine mechanische Eigenschaft für zumindest einen Teil der Vielzahl Pakete 1 und vorzugsweise für sämtliche der Pakete 1 erfasst wird. Die mechanische Eigenschaft kann beispielsweise eine Festigkeit des Pakets bzw. eine Umverpackung des Pakets 1 sein. Demgemäß kann bei dem Kategorisieren der Pakete 1 anhand der objektspezifischen Information nach der Festigkeit der Pakete 1 unterschieden werden, beispielsweise können Pakete 1, die eine im Wesentliche feste (Karton)Verpackung aufweisen, von Paketen 1 unterschieden werden, die beispielsweise in Folienbeuteln vorliegen.

Für die Kategorisierung können die Pakete 1 unterschiedlicher Kategorien in unterschiedliche Sortierendstellen 3 vorsortiert werden. Mit einem Kamerasystem 4 oberhalb der Sortierendstellen 3 kann ein Beladezustand der Sortierendstellen 3 erfasst werden. Beispielsweise kann bei den Paketen 1, die in üblichen festen Kartons verpackt sind, aus dem sich in der betreffenden Sortierendstelle 3 einstellenden Schütt- und Befüllungsverhaltens der Pakete 1 geschlossen werden, auf das Schütt- und Befüllungsverhalten dieser Pakete 1 geschlossen werden, wenn diese für das Beladen des Speditionsbehälters von der Sortierendstelle 3 in den Speditionsbehälter 100 geschüttet werden.

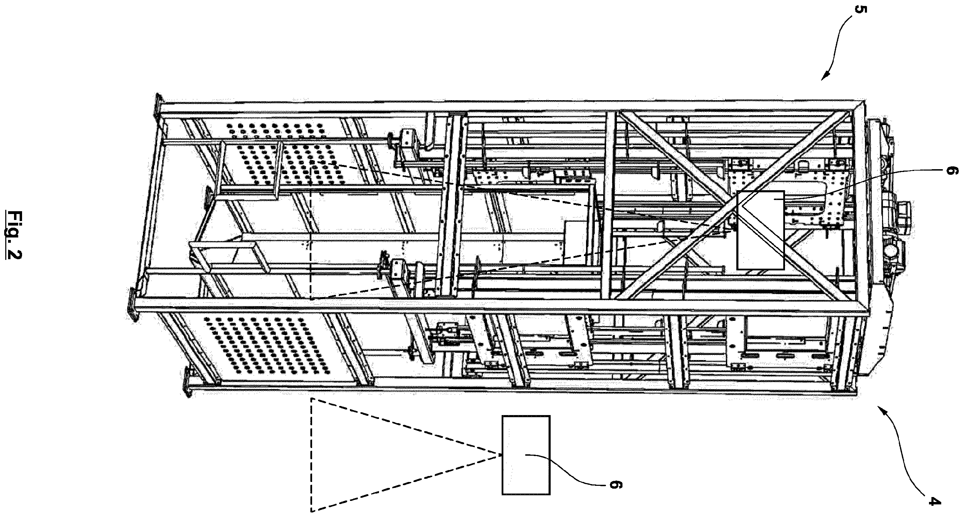

Die Figur 2 zeigt einen Beladeturm 5 für die Beladung eines Speditionsbehälters 100, welcher an seinem oberen Ende ein Kamerasystem 6 aufweist, welches dazu eingerichtet ist, vor dem Befüllen des Speditionsbehälters 100 den Befüllungszustand des Speditionsbehälters 100 zu erfassen, insbesondere dahingehend, ob in dem Speditionsbehälter noch Sendungen eines vorangegangenen Sortiervorgangs vorhanden sind, oder ob der Speditionsbehälter 100 vollständig entleert ist und damit für die Beladung mit Paketen 1 zur Verfügung steht. Alternativ kann das Kamerasystem 6 auch außerhalb des Beladeturm bereitgestellt sein, sodass die zu beladenden Speditionsbehälter 100 vor dem Einfahren in den Beladeturm 5 bereits auf ihre vollständige Entleerung geprüft werden.

Nachdem die Pakete 1 kategorisiert worden sind und dazu beispielsweise in der zuvor beschriebenen Weise in Sortierendstellen 3 vorsortiert worden sind, kann die Beladereihenfolge unter zusätzlicher Berücksichtigung der mindestens einen mechanischen Eigenschaft zumindest für einen Teil der Vielzahl Pakete 1 erfasst werden. Dabei können sich mindestens zwei der Kategorien bzw. die den Kategorien zugeordneten Pakete 1 in mindestens einer mechanischen Eigenschaft unterscheiden. Beispielsweise können die Pakete 1 einer ersten Kategorie eine größere Festigkeit als die Pakete 1 einer zweiten Kategorie aufweisen. Beispielsweise kann die Verpackung der Pakete 1 der ersten Kategorie eine im Wesentlichen feste Verpackung sein, beispielsweise eine Verpackung aus Karton, während die Verpackung der Pakete 1 der anderen Kategorie eine weiche Verpackung ist, beispielsweise ein Folienbeutel. Für die Erreichung einer maximalen Anzahl Pakete 1, die in den Speditionsbehälter geladen werden können, kann vorgesehen sein, dass die Pakete 1 mit der weichen Verpackung vor den Paketen 1 der Kategorie der Pakete 1 mit harter Verpackung in den Speditionsbehälter 100 geladen werden. Dies hat zur Folge, dass die Beladung der Pakete 1 mit fester Verpackung auf die Pakete 1 mit weicher Verpackung zu einer Komprimierung der Pakete 1 mit weicher Verpackung und damit zu einer Verdichtung der Pakete 1 mit weicher Verpackung führt, wodurch die Anzahl der in dem Speditionsbehälter 100 aufgenommenen Pakete erhöht wird.

Zusätzlich kann aus dem Schütt- und Packungsverhalten der Pakete 1 mit fester Verpackung in der Sortierendstelle 3 auf das Schütt- und Packungsverhalten der Pakete 1 in dem Speditionsbehälter geschlossen werden, wenn diese in den Speditionsbehälter 100 umgeladen werden. Auch diese Information kann dazu verwendet werden, um eine möglichst hohe Anzahl Pakete 1 in den Speditionsbehälter zu laden, ohne dass eine Überfüllung des Speditionsbehälters 100 befürchtet werden müsste. Insbesondere müssen die im Stand der Technik zur Unterbindung einer unbedingt zu vermeidenden Überfüllung des Speditionsbehälters berücksichtigten Sicherheitsabschläge hinsichtlich der Anzahl der in den Speditionsbehälter 100 geladenen Pakete 1 nicht mehr eingehalten werden, da aufgrund der erfindungsgemäßen Kategorisierung der Pakete 1 eine prozesssichere Beladung des Speditionsbehälters 100 erreicht wird.

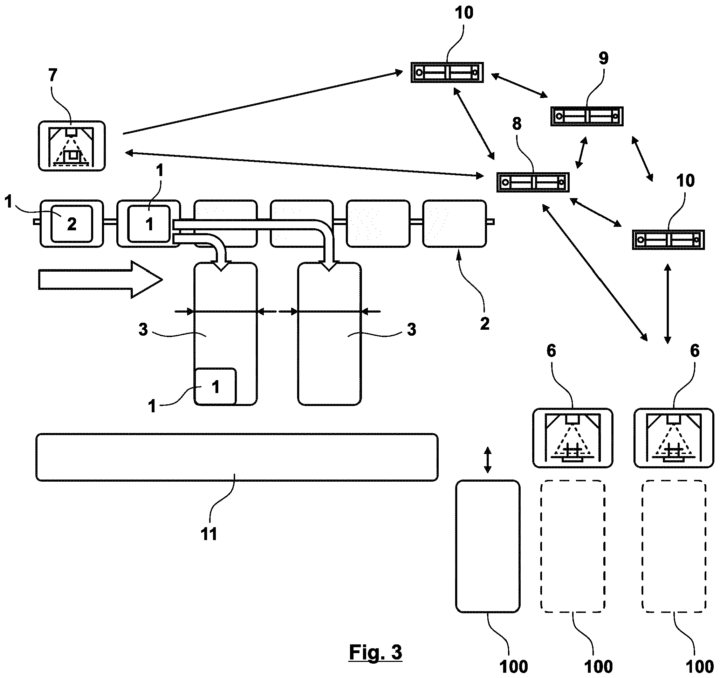

Die Figur 3 zeigt in schematische Darstellung eine Anordnung zum Beladung eines Speditionsbehälters 100 mit Paketen 1 für die Ausführung des erfindungsgemäßen Verfahrens. Die Anordnung weist einen Sorter 2 auf, der vorliegend als ein Quergurtsorter ausgebildet ist. Für das Erfassen objektspezifischer Informationen ist ein Dimensioning-Weighing-System (DWS-System) 7 vorgesehen. Das DWS-System 7 kann beispielsweise dazu eingerichtet sein, neben dem Gewicht die äußeren Abmessungen des Pakets 1 für die Volumenbestimmung zu ermitteln. Das DWS-System 7 kann weiterhin dazu eingerichtet sein, Beschädigungen des Pakets 1 bzw. einer Hülle des Pakets 1 zu erkennen. Die Bestimmung der äußeren Abmessungen des Pakets 1 sowie die Bestimmung von möglichen Beschädigungen des Pakets 1 können anhand eines Abbilds und geeigneter Bildverarbeitung ermittelt werden. Für die Erzeugung des Abbilds kann das DWS-System 7 ein optisches Kamerasystem aufweisen.

Das DWS-System 7 ist über eine Datenverbindung mit einem Steuerungssystem 8 verbunden, welches die von dem DWS-System 7 ermittelten objektspezifischen Informationen empfängt. Das Steuerungssystem 8 kann einen Bildspeicher 9 aufweisen oder mit einem Bildspeicher 9 über eine weitere Datenverbindung verbunden sein. Das Steuerungssystem 8 kann weiterhin für das Maschinenlernen eingerichtet sein oder mit einem gesonderten Maschinenlernsystem 10 über eine Datenschnittstelle verbunden sein. Das DWS-System 7 kann unmittelbar mit dem Maschinenlernsystem 10 über eine Datenschnittstelle verbunden sein, wenn das Maschinenlernsystem 10 nicht Bestandteil des Steuerungssystems 8 ist.

Das Maschinenlernsystem 10 oder das Steuerungssystem 8 ist dazu eingerichtet, die Pakete 1 anhand der erfassten objektspezifischen Informationen zu kategorisieren. Das Maschinenlernsystem 10 kann weiterhin dazu eingerichtet sein, Beschädigungen oder andere charakteristische Eigenschaften der Pakete 1 anhand der über das DWS-System 7 erfassten objektspezifischen Informationen zu ermitteln. Für das Festlegen der Kategorisierung kann das Maschinenlernsystem 10 auf einen Bildspeicher 9 zurückgreifen, in dem eine Datenbank von Referenzbildern mit mindestens einer zugeordneten Kategorisierung vorgehalten sind. Das Maschinenlernsystem 10 und/oder das Steuerungssystem 8 kann dazu eingerichtet sein, von dem DWS-System 7 erfasste Abbilder, die mithilfe des Maschinenlernsystem 10 durch Abgleich von Referenzbildern des Bildspeichers 9 kategorisieren worden sind, in dem Bildspeicher 9 unter Zuordnung der Kategorisierung abzuspeichern.

In Abhängigkeit von der Kategorisierung oder unabhängig davon können die Pakete 1 auf eine der beiden Sortierendstellen 3 vorsortiert werden. Die Sortierendstellen 3 können - müssen jedoch nicht - für die Separierung von Paketen 1 vorgesehen sein, die sich nach der Kategorisierung in mindestens einer zugeordneten Kategorie voneinander unterscheiden. Es kann jedoch auch vorgesehen sein, dass die beiden Sortierendstellen 3 Pakete 1 empfangen, die bei dem Kategorisieren dieselbe Kategorie oder dieselben Kategorien zugeordnet bekommen haben, sodass die beiden Sortierendstellen 3 lediglich voneinander getrennte Pufferspeicher für die Speicherung der Pakete 1 vor dem Beladen des Speditionsbehälters 100 darstellen.

Bei dem Kategorisieren kann ein Gewichtungsfaktor bestimmt werden, mit dem ein von dem DWS-System 7 ermitteltes tatsächliches Volumen des Pakets 1 beaufschlagt wird. Der Gewichtungsfaktor kann dazu eingerichtet sein, ein erwartetes Packvolumen des betreffenden Pakets 1 zu berücksichtigen, wenn das Paket 1 in den Speditionsbehälter 100 geladen wurde. Das Packvolumen des Pakets 1 kann von seinen Abmessungen, seiner Festigkeit und/oder weiteren objektspezifischen Eigenschaften abhängen. So kann beispielsweise ein weiches Paket 1, beispielsweise ein Folienbeutel, ein Packvolumen aufweisen, welches wesentlich geringer als sein tatsächliches Volumen ist. Damit kann berücksichtigt werden, dass weiche Pakete 1 bei dem Verladen in den Speditionsbehälter 100 beispielsweise Zwischenräume zwischen festen und/oder quaderförmigen Paketen einnehmen können und damit faktisch und im Grenzfall sogar kein zusätzliches Volumen einnehmen. Ebenso können besonders kleine, jedoch feste Pakete 1 ein geringes Packvolumen aufweisen, da sie Zwischenräume zwischen festen und quaderförmigen Paketen einnehmen können. Schließlich können feste und sperrige Pakete 1, bei denen beispielsweise eine Kantenlänge wesentlich größer als mindestens eine weitere Kantenlänge des Pakets 1 ist, nach dem Verladen in den Speditionsbehälter 100 ein Packvolumen aufweisen, welches größer als ihr tatsächliches Volumen ist. Dies kann insbesondere längliche Pakete 1 und flächige Pakete 1 betreffen.

Nachdem die Summe der gewichteten Volumina der Pakete 1 in den beiden Sortierendstellen 3 ein für Volumen des Speditionsbehälters 100 erreicht hat, können die Sortierendstellen 3 bzw. die darin aufgenommenen Pakete 1 in den Speditionsbehälter 100 umgeladen werden. Dazu können die Sortierendstellen 3 auf einen Abzugsförderer 11 abgeführt werden. Von dem Abzugsförderer 11 werden die Pakete 1 in die Speditionsbehälter 100 eingeleitet, beispielsweise über eine Einfüllöffnung an der Oberseite oder nahe der Oberseite des Speditionsbehälters 100.

Um die Prozesssicherheit des füllstandsoptimierten Befüllens des Speditionsbehälters 100 weiter zu erhöhen, kann ein Kamerasystem 6 oder ein sonstiges Sensorsystem vorgesehen sein, welches den Füllzustand, insbesondere den Leerzustand des Speditionsbehälters 100 erfasst, bevor der Speditionsbehälter 100 befüllt wird.

Analog kann dasselbe Kamerasystem 6 oder ein zweites Kamerasystem dazu eingerichtet sein, nach dem Befüllen des Speditionsbehälters 100 einen Füllzustand des Speditionsbehälters 100 zu erfassen. Dazu kann beispielsweise über die Oberseite des Speditionsbehälters 100 ein Abbild des Speditionsbehälters 100 bzw. der Einfüllöffnung des Speditionsbehälters 100 erfasst werden. Durch Abgleich mit Referenzbildern in einem Bildspeicher 9 kann ermittelt werden, inwiefern die optimale Füllhöhe des Speditionsbehälters 100 erreicht wurde. Dass in dem Bildspeicher 9 abgelegte Abbild des Speditionsbehälters 100 kann mit den einzelnen gewichteten Volumina und gegebenenfalls sonstigen Eigenschaften der Pakete 1 in dem Speditionsbehälter 100 verknüpft werden.

Durch Abgleich des ermittelten Füllstands und durch in Bezug setzen des Füllstands zu den über das Abbild mit dem Füllstand verknüpften, gewichteten Volumina kann eine Optimierung des Beladevorgangs des Speditionsbehälters 100 erreicht werden. Aus einer Mehrzahl Füllstandsabbilder, die mit jeweiligen gewichteten Volumina verknüpft sind, können mittels Maschinenlernens Regelmäßigkeiten erkannt werden, die zu einer Unterfüllung oder zu einer Überfüllung des Speditionsbehälters 100 führen. So kann beispielsweise erkannt werden, dass der Anteil kleiner und/oder komprimierender Pakete 1 erhöht werden kann, wenn ein gewisser Anteil sperriger Pakete 1 vorhanden ist, die Lehrräume ausbilden, welche die kleinen und komprimiert waren Pakete 1 füllen können. Dies kann dazu führen, dass der Gewichtungsfaktor kleiner und/oder komprimierbarer Pakete 1 weiter herabgesetzt wird.

### Bezugszeichenliste

- 1: Paket
- 2: Sorter
- 3: Sortierendstelle
- 4: Kamerasystem der Sortierendstelle
- 5: Beladeturm
- 6: Kamerasystem des Beladeturms
- 7: DWS-System
- 8: Steuerungssystem
- 9: Bildspeicher
- 10: Maschinenlernsystem
- 11: Abzugsförderer
- 100: Speditionsbehälter

## Patentansprüche

1. Verfahren für die Kategorisierung von Paketen (1) zur Beladung einer Endstelle (100), insbesondere eines Speditionsbehälters, wobei das Verfahren die Schritte aufweist:
a) Erfassen mindestens einer objektspezifischen Information für jedes Paket (1) einer Vielzahl Pakete (1) in einem Sorter (2) für die Beladung einer Endstelle (100);
b) Kategorisieren der Pakete (1) anhand der jeweils erfassten objektspezifischen Information, wobei für jedes der Pakete (1) mindestens eine Kategorie aus einer Mehrzahl Kategorien zugeordnet wird;
**dadurch gekennzeichnet, dass** bei dem Kategorisieren ein von der objektspezifischen Information oder von einer weiteren objektspezifischen Information des jeweiligen Pakets (1) abhängiger Gewichtungsfaktor bestimmt wird, mit dem die objektspezifische Information beaufschlagt wird, wobei eine gewichtete objektspezifische Information des jeweiligen Pakets (1) erhalten wird.

2. Verfahren nach Anspruch 1, das weiterhin die Schritte aufweist:
c) Bestimmen einer Beladereihenfolge, mit der die Pakete (1) in die Endstelle (100) geladen werden sollen, unter Berücksichtigung der den Paketen (1) jeweils zugeordneten mindestens einen Kategorie; und
d) Beladen der Endstelle (100) in der Beladereihenfolge.

3. Verfahren nach Anspruch 1 oder 2, bei dem das Erfassen der mindestens einen objektspezifischen Information das Erfassen eines Volumens und mindestens einer weiteren objektspezifischen Information des jeweiligen Pakets (1) aufweist, und bei dem bei dem Kategorisieren aus der weiteren objektspezifischen Information der Gewichtungsfaktor bestimmt wird, mit dem das Volumen beaufschlagt wird, wobei ein gewichtetes Volumen des jeweiligen Pakets (1) erhalten wird.

4. Verfahren nach einem der vorangegangenen Ansprüche, bei dem das Kategorisieren das Sortieren der Pakete (1) auf eine von mindestens zwei voneinander getrennten Sortierendstelle (3) aufweist, die in der Beladereihenfolge in die Endstelle (100) umgeladen werden.

5. Verfahren nach Anspruch 4, bei dem das Umladen der Pakete (1) das Ausschleusen der Pakete (1) aus mindestens einer der Sortierendstellen (3) auf einen Abzugsförderer (11) aufweist, der zwischen den Sortierendstellen (3) und einer Beladestation für Endstellen (100) geführt ist.

6. Verfahren nach Anspruch 4 oder 5, bei dem die mindestens zwei Sortierendstellen (3) in der Beladereihenfolge in die Endstelle umgeladen werden, nachdem die Summe der gewichteten Volumina der auf die Sortierendstellen (3) sortierten Pakete (1) ein Aufnahmevolumen Endstelle (100) erreicht hat.

7. Verfahren nach einem der vorangegangenen Ansprüche, bei dem das Erfassen der mindestens einen objektspezifischen Information das Erfassen mindestens einer mechanischen Eigenschaft für zumindest einen Teil der Vielzahl Pakete (1) aufweist.

8. Verfahren nach einem der vorangegangenen Ansprüche, bei dem das Erfassen der mindestens einen objektspezifischen Information das Erzeugen eines Abbilds des Pakets (1) aufweist, und wobei das Kategorisieren das Abgleichen des erzeugten Abbilds mit Bildern in einer Datenbank aufweist, denen jeweils mindestens eine Kategorie zugeordnet ist.

9. Verfahren nach Anspruch 8, das das Hinterlegen des erzeugten Abbilds in der Datenbank aufweist, wobei bei dem Hinterlegen dem Abbild wenigstens diejenige mindestens eine Kategorie zugeordnet wird, die bei dem Abgleichen demjenigen Bild in der Datenbank zugeordnet ist, welches eine geringste Abweichung zu dem Abbild aufweist.

10. Verfahren nach einem der vorangegangenen Ansprüche, bei dem das Erfassen der mindestens einen objektspezifischen Information das Erfassen einer volumenunabänigigen objektspezifischen Information aufweist, vorzugsweise das Erfassen eines Gewichts, einer Beschädigung, einer Form, einer Festigkeit oder einer Gefahrenquelle.

11. Verfahren nach einem der vorangegangenen Ansprüche, bei dem die Pakete (1) für das Erfassen in einen Umlaufsorter (2) eingespeist werden, vorzugsweise einen Liegesorter (2), einen Taschensorter (2) oder einen kombinierten Liege- und Taschensorter (2), wobei das Erfassen der mindestens einen objektspezifischen Information erfolgt, während die Pakete (1) in dem Umlaufsorter (2) transportiert werden.

12. Verfahren nach einem der vorangegangenen Ansprüche, bei dem das Erfassen der mindestens einen objektspezifischen Information das Erfassen einer jeweiligen Festigkeit der Vielzahl Pakete (1) oder einer jeweiligen äußeren Hülle oder Umverpackung der Vielzahl Pakete (1) aufweist, wobei die Pakete (1) bei dem Kategorisieren in jeweils eine aus mindestens zwei Kategorien unterschiedlicher Festigkeitsbereiche eingeteilt werden.

13. Verfahren nach einem der vorangegangenen Ansprüche, bei dem bei dem Erfassen der mindestens einen objektspezifischen Information erfasst wird, ob das jeweilige Paket (1) eine reversibel verformbare Umverpackung aufweist, oder nicht, wobei die Pakete (1) bei dem Kategorisieren in Pakete (1) mit reversibel verformbarer Umverpackung und solche ohne reversibel verformbare Umverpackung eingeteilt werden.

14. Verfahren nach einem der vorangegangenen Ansprüche, bei dem bei dem Erfassen der mindestens einen objektspezifischen Information für zumindest einen Teil der Pakete (1) der Vielzahl Pakete (1) mindestens eine weitere Eigenschaft aus der Gruppe Gewicht, Volumen und Abmessungen erfasst wird.

15. Verfahren nach Anspruch 14, bei dem die mindestens eine weitere Eigenschaft aus der Gruppe Gewicht, Volumen und Abmessungen zumindest für diejenigen Pakete (1) der Vielzahl Pakete (1) erfasst wird, für die bei dem Erfassen die Festigkeit ihrer jeweiligen äußeren Hülle oder Umverpackung erfasst worden ist, wobei die Pakete (1) bei dem Kategorisieren in jeweils eine aus mindestens zwei Kategorien unterschiedlicher Festigkeitsbereiche eingeteilt werden.

16. Verfahren nach Anspruch 12 oder 15, bei dem bei dem Beladen der Endstelle (100) die Pakete (1) der Kategorie eines ersten Festigkeitsbereichs vor den Paketen (1) der Kategorie eines gegenüber dem ersten Festigkeitsbereich höheren zweiten Festigkeitsbereichs in die Endstelle (100) geladen werden.

17. Verfahren nach Anspruch 16, bei dem, vorzugsweise vor dem Beladen, ein erstes Gesamtvolumen der Pakete (1) der ersten Kategorie und ein zweites Gesamtvolumen der Pakete (1) der zweiten Kategorie, die in der Beladereihenfolge in den Speditionsbehälter (100) geladen werden, in Abhängigkeit einer erwarteten Komprimierung der Pakete (1) der zweiten Kategorie bei dem Laden der Pakete (1) der ersten Kategorie auf die Pakete (1) der zweiten Kategorie ermittelt werden.

18. Verfahren nach einem der vorangegangenen Ansprüche, das vor dem Erfassen das Einschleusen der Vielzahl Pakete (1), und vorzugsweise weiterer Pakete (1), in den Sorter (2) aufweist, wobei die Pakete (1) in dem Sorter (2) gepuffert und erst dann die Vielzahl Pakete (1) in der Beladereihenfolge, vorzugsweise unmittelbar, in den Speditionsbehälter (100) geladen werden, wenn das Beladen der Vielzahl Pakete (1) die vollständige Beladung des Speditionsbehälters (100) erwarten lässt.

19. Verfahren nach Anspruch 18, bei dem die vollständige Beladung der Endstelle (100) erwartet wird, wenn die für das Beladen der Endstelle (100) bestimmte Vielzahl Pakete (1) unter Berücksichtigung einer erwarteten Packungsdichte bei der bestimmten Beladereihenfolge ein Füllvolumen aufweist, das einem Aufnahmevolumen der Endstelle (100) entspricht oder nahekommt.

20. Verfahren nach einem der vorangegangenen Ansprüche, bei dem vor dem Beladen der Endstelle (100) ein Beladezustand erfasst wird, wobei vorzugsweise erfasst wird, ob die Endstelle (100) leer ist.

21. Verfahren nach einem der vorangegangenen Ansprüche, bei dem nach dem Beladen der Endstelle (100) ein Beladezustand erfasst wird, wobei vorzugsweise erfasst wird, ob die Endstelle (100) einen Sollfüllstand aufweist, und wobei besonders bevorzugt bei einem Über- oder Unterschreiten des Sollfüllstands ein Volumen erfasst wird, mit dem der Sollfüllstand über- oder unterschritten wird.

22. Verfahren nach Anspruch 21, bei dem für das Erfassen des Beladezustands ein Füllstandsabbild einer oberen Einfüllöffnung der Endstelle (100) erzeugt und das erzeugte Füllstandsabbild mit Bildern in einer Datenbank abgeglichen wird, denen ein Beladezustand zugeordnet ist, wobei jedem Beladezustand eine Summe gewichteter Volumina von Paketen (1) und/oder einer Vielzahl einzelner gewichteter Volumina von Paketen (1) und/oder mindestens eine volumenunabhängige objektspezifische Information für jedes der dem Beladezustand zugeordneten Pakete (1) zugeordnet ist.

23. Verfahren nach Anspruch 22, das das Hinterlegen des erzeugten Füllstandsabbilds in der Datenbank aufweist, wobei bei dem Hinterlegen dem Füllstandsabbild derjenige Beladezustand zugeordnet wird, der bei dem Abgleichen demjenigen Bild in der Datenbank zugeordnet ist, welches eine geringste Abweichung zu dem Füllstandsabbild aufweist.

24. Verfahren nach Anspruch 22 oder 23, bei dem der durch das Abgleichen erfasste Beladezustand mit der Summe der gewichteten Volumina der in der Endstelle (100) aufgenommenen Pakete (1) abgeglichen wird.

25. Verfahren nach einem der Ansprüche 21 oder 22, das weiterhin das kontinuierliche oder iterative Anpassen eines Algorithmus für das Kategorisieren der Pakete (1) aufweist, wozu die bei dem Abgleichen erfasste geringste Abweichung durch Variieren des Gewichtungsfaktors und Verwenden eines dabei erhaltenen, variierten Gewichtungsfaktors bei einem weiteren Kategorisierungsschritt eines weiteren Pakets (1) minimiert wird, wobei das Anpassen des Algorithmus für das Kategorisieren der Pakete (1) vorzugsweise mittels Maschine Learning erfolgt.

26. Verfahren nach einem der vorangegangenen Ansprüche, bei dem das Erfassen mindestens einer objektspezifischen Information das Erfassen einer Beschädigung mindestens eines der Pakete (1), vorzugsweise einer äußeren Hülle oder Umverpackung des Pakets (1), aufweist, wobei bei einer erfassten Beschädigung für mindestens eines der Pakete (1) das betreffende Paket (1) bei dem Kategorisieren einer Kategorie für beschädigte Pakete (1) zugeordnet wird, wobei die Pakete (1) der Kategorie für beschädigte Pakete (1) bei der Bestimmung der Beladereihenfolge einer Endposition in der Beladereihenfolge zugeordnet werden.

## Claims

1. A method for categorizing packets (1) for loading a terminal (100), in particular a shipping container, wherein the method comprises the steps of:
a) acquiring at least one item of object-specific information for each packet (1) of a plurality of packets (1) in a sorter (2) for loading a terminal (100);
b) categorizing the packets (1) on the basis of the respectively acquired object-specific information, wherein at least one category from a plurality of categories is assigned to each of the packets (1);
**characterized in that** a weighting factor which is dependent on the object-specific information or on a further object-specific information of the respective packet (1) is determined during the categorization and is applied to the object-specific information, wherein a weighted object-specific information of the respective packet (1) is obtained.

2. The method according to claim 1, which further comprises the steps of:
c) determining a loading order with which the packets (1) are to be loaded into the terminal (100), taking into account the at least one category respectively assigned to the packets (1); and
d) loading the terminal (100) in the loading order.

3. The method according to claim 1 or 2, in which the acquiring of the at least one object-specific information comprises acquiring a volume and at least one further object-specific information of the respective packet (1), and in which the weighting factor with which the volume is applied is determined from the further object-specific information during the categorization, wherein a weighted volume of the respective packet (1) is obtained.

4. The method according to any one of the preceding claims, in which the categorizing comprises sorting the packets (1) to one of at least two sorting terminals (3) separated from one another, which are transferred into the terminal (100) in the loading order.

5. The method according to claim 4, in which the transferring of the packets (1) comprises discharging the packets (1) from at least one of the sorting terminals (3) to a discharge conveyor (11), which is guided between the sorting terminals (3) and a loading station for terminals (100).

6. The method according to claim 4 or 5, in which the at least two sorting terminals (3) are transferred into the terminal in the loading order after the sum of the weighted volumes of the packets (1) sorted to the sorting terminals (3) has reached a receiving volume of the terminal (100).

7. The method according to any one of the preceding claims, in which the acquiring of the at least one object-specific information comprises acquiring at least one mechanical property for at least some of the plurality of packets (1).

8. The method according to any one of the preceding claims, in which the acquiring of the at least one object-specific information comprises generating an image of the packet (1), and wherein the categorizing comprises matching the generated image with images in a database to which at least one category is respectively assigned.

9. The method according to claim 8, which comprises storing the generated image in the database, wherein during the storing at least that at least one category is assigned to the image which, during the matching, is assigned to that image in the database which has a smallest deviation from the image.

10. The method according to any one of the preceding claims, in which the acquiring of the at least one object-specific information comprises acquiring a volume-independent object-specific information, preferably acquiring a weight, a damage, a shape, a strength or a source of danger.

11. The method according to any one of the preceding claims, in which the packets (1) are fed into a circulating sorter (2) for the acquiring, preferably a lying sorter (2), a pocket sorter (2) or a combined lying and pocket sorter (2), wherein the acquiring of the at least one object-specific information takes place while the packets (1) are transported in the circulating sorter (2).

12. The method according to any one of the preceding claims, in which the acquiring of the at least one object-specific information comprises acquiring a respective strength of the plurality of packets (1) or a respective outer casing or outer packaging of the plurality of packets (1), wherein the packets (1) are each divided into one from at least two categories of different strength ranges during the categorizing.

13. The method according to any one of the preceding claims, in which it is acquired during the acquiring of the at least one object-specific information whether the respective packet (1) comprises a reversibly deformable outer packaging or not, wherein the packets (1) are divided into packets (1) with reversibly deformable outer packaging and those without reversibly deformable outer packaging during the categorizing.

14. The method according to any one of the preceding claims, in which at least one further property from the group of weight, volume and dimensions is acquired during the acquiring of the at least one object-specific information for at least some of the packets (1) of the plurality of packets (1).

15. The method according to claim 14, in which the at least one further property from the group of weight, volume and dimensions is acquired at least for those packets (1) of the plurality of packets (1) for which the strength of their respective outer casing or outer packaging has been acquired during the acquiring, wherein the packets (1) are each divided into one from at least two categories of different strength ranges during the categorizing.

16. The method according to claim 12 or 15, in which, during the loading of the terminal (100), the packets (1) of the category of a first strength range are loaded into the terminal (100) before the packets (1) of the category of a second strength range higher than the first strength range.

17. The method according to claim 16, in which, preferably before the loading, a first total volume of the packets (1) of the first category and a second total volume of the packets (1) of the second category, which are loaded into the shipping container (100) in the loading order, are determined depending on an expected compression of the packets (1) of the second category during the loading of the packets (1) of the first category onto the packets (1) of the second category.

18. The method according to any one of the preceding claims, which comprises, before the acquiring, introducing the plurality of packets (1), and preferably further packets (1), into the sorter (2), wherein the packets (1) are buffered in the sorter (2) and the plurality of packets (1) are loaded into the shipping container (100) in the loading order, preferably directly, only when the loading of the plurality of packets (1) makes the complete loading of the shipping container (100) to be expected.

19. The method according to claim 18, in which the complete loading of the terminal (100) is expected when the plurality of packets (1) determined for the loading of the terminal (100) has, taking into account an expected packing density in the determined loading order, a filling volume which corresponds to or approaches a receiving volume of the terminal (100).

20. The method according to any one of the preceding claims, in which a loading state is acquired before the loading of the terminal (100), wherein it is preferably acquired whether the terminal (100) is empty.

21. The method according to any one of the preceding claims, in which a loading state is acquired after the loading of the terminal (100), wherein it is preferably acquired whether the terminal (100) has a target filling level, and wherein a volume with which the target filling level is exceeded or undershot is particularly preferably acquired when the target filling level is exceeded or undershot.

22. The method according to claim 21, in which a filling level image of an upper filling opening of the terminal (100) is generated for the acquiring of the loading state and the generated filling level image is matched with images in a database to which a loading state is assigned, wherein a sum of weighted volumes of packets (1) and/or a plurality of individual weighted volumes of packets (1) and/or at least one volume-independent object-specific information for each of the packets (1) assigned to the loading state is assigned to each loading state.

23. The method according to claim 22, which comprises storing the generated filling level image in the database, wherein during the storing that loading state is assigned to the filling level image which, during the matching, is assigned to that image in the database which has a smallest deviation from the filling level image.

24. The method according to claim 22 or 23, in which the loading state acquired by the matching is matched with the sum of the weighted volumes of the packets (1) received in the terminal (100).

25. The method according to any one of claims 21 or 22, which further comprises the continuous or iterative adaptation of an algorithm for the categorizing of the packets (1), for which purpose the smallest deviation acquired during the matching is minimised by varying the weighting factor and using a varied weighting factor obtained thereby in a further categorization step of a further packet (1), wherein the adaptation of the algorithm for the categorizing of the packets (1) preferably takes place by means of machine learning.

26. The method according to any one of the preceding claims, in which the acquiring of at least one object-specific information comprises acquiring a damage to at least one of the packets (1), preferably an outer casing or outer packaging of the packet (1), wherein, in the case of an acquired damage for at least one of the packets (1), the packet (1) in question is assigned to a category for damaged packets (1) during the categorizing, wherein the packets (1) are assigned to the category for damaged packets (1) during the determination of the loading order of a terminal position in the loading order.

## Revendications

1. Procédé de catégorisation de paquets (1) pour le chargement d'une station terminale (100), plus particulièrement d'un récipient d'expédition, dans lequel le procédé comprend les étapes suivantes :
a) détermination d'une information spécifique à l'objet pour chaque paquet (1) d'une pluralité de paquets (1) dans un dispositif de tri (2) pour le chargement d'une station terminale (100) ;
b) catégorisation des paquets (1) à l'aide de l'information déterminée, dans lequel, à chacun des paquets (1), est attribuée au moins une catégorie parmi une pluralité de catégories ;
**caractérisé en ce que**, lors de la catégorisation, un facteur de pondération, dépendant de l'information spécifique à l'objet ou d'une autre information spécifique à l'objet du paquet (1) correspondant, est déterminé avec lequel l'information spécifique à l'objet est soumise, dans lequel une information spécifique à l'objet pondérée du paquet (1) correspondant est obtenue.

2. Procédé selon la revendication 1, qui comprend en outre les étapes suivantes :
c) détermination d'un ordre de chargement avec lequel les paquets (1) doivent être chargés dans la station terminale (100), en tenant compte de l'au moins une catégorie correspond respectivement aux paquets (1) ; et
d) chargement de la station terminale (100) dans l'ordre de chargement.

3. Procédé selon la revendication 1 ou 2, dans lequel la détermination de l'au moins une information spécifique à l'objet comprend la détermination d'un volume et d'au moins une autre information spécifique à l'objet du paquet (1) correspondant et dans lequel, lors de la catégorisation, le facteur de pondération avec lequel le volume est soumis est déterminé à partir de l'autre information spécifique à l'objet, dans lequel un volume pondéré du paquet (1) correspondant est obtenu.

4. Procédé selon l'une des revendications précédentes, dans lequel la catégorisation comprend le tri des paquets (1) sur une parmi deux stations terminales de tri (3) distinctes l'une de l'autre, qui sont transbordées dans la station terminale (100) dans l'ordre de chargement.

5. Procédé selon la revendication 4, dans lequel le transbordement des paquets (1) comprend l'évacuation des paquets (1) hors d'au moins une des stations terminales de tri (3) sur un convoyeur d'évacuation (11), qui est guidé entre les stations terminales de tri (3) et une station de chargement pour les stations terminales (100).

6. Procédé selon la revendication 4 ou 5, dans lequel les au moins deux stations terminales de tri (3) sont transbordées dans la station terminale dans l'ordre de chargement après que la somme des volumes pondérés des paquets (1) triés sur les stations terminales de tri (3) a atteint une capacité de la station terminale (100).

7. Procédé selon l'une des revendications précédentes, dans lequel la détermination de l'au moins une information spécifique à l'objet comprend la détermination d'au moins une propriété mécanique pour au moins une partie de la pluralité de paquets (1).

8. Procédé selon l'une des revendications précédentes, dans lequel la détermination de l'au moins une information spécifique à l'objet comprend la production d'une représentation du paquet (1) et dans lequel la catégorisation comprend la comparaison la représentation produite avec des images dans une base de données, auxquelles correspond respectivement au moins une catégorie.

9. Procédé selon la revendication 8, qui comprend l'enregistrement de la représentation produite dans la base de données, dans lequel, lors de l'enregistrement, est attribuée à la représentation, au moins la catégorie qui correspond, lors de la comparaison, à l'image qui présente l'écart le plus faible par rapport à la représentation.

10. Procédé selon l'une des revendications précédentes, dans lequel la détermination de l'au moins une information spécifique à l'objet comprend la détermination d'une information spécifique à l'objet dépendant du volume, de préférence la détermination d'un poids, d'un endommagement, d'une forme, d'une résistance ou d'une source de danger.

11. Procédé selon l'une des revendications précédentes, dans lequel les paquets (1) sont introduits, pour la détermination, dans un dispositif de tri circulaire (2), de préférence un dispositif de tri horizontal (2), un dispositif de tri à pochettes (2) ou un dispositif de tri combiné horizontal et à pochettes (2), dans lequel la détermination de l'au moins une information spécifique à l'objet a lieu pendant que les paquets (1) sont transportés dans le dispositif de tri circulaire (2).

12. Procédé selon l'une des revendications précédentes, dans lequel la détermination de l'au moins une information spécifique à l'objet comprend la détermination d'une résistance correspondante de la pluralité de paquets (1) ou d'une enveloppe externe ou d'un emballage correspondant de la pluralité de paquets (1), dans lequel les paquets (1) sont classés, lors de la catégorisation, dans au moins une parmi deux catégories de plages de résistance différentes.

13. Procédé selon l'une des revendications précédentes, dans lequel, lors de la détermination de l'au moins une information spécifique à l'objet, il est déterminé si le paquet (1) correspondant présente un emballage déformable de manière réversible ou non, dans lequel les paquets (1) sont classés, lors de la catégorisation, en paquets (1) avec emballage déformable de manière réversible ou en paquets sans emballage déformable de manière réversible.

14. Procédé selon l'une des revendications précédentes, dans lequel, lors de la détermination de l'au moins une information spécifique à l'objet, pour au moins une partie des paquets (1) de la pluralité de paquets (1), au moins une autre propriété sélectionnée dans le groupe constitué du poids, du volume et des dimensions est déterminée.

15. Procédé selon la revendication 14, dans lequel l'au moins une autre propriété sélectionnée dans le groupe constitué du poids, du volume et des dimensions est détermination au moins pour les paquets (1) de la pluralité de paquets (1) pour lesquels, lors de la détermination, la résistance de leur enveloppe externe ou de leur emballage correspondant a été déterminée, dans lequel les paquets (1) sont classés, lors de la catégorisation, respectivement dans une parmi au moins deux catégories de plages de résistance différentes.

16. Procédé selon la revendication 12 ou 15, dans lequel, lors du chargement de la station terminale (100) les paquets (1) de la catégorie d'une première plage de résistance sont chargés dans la station terminale (100) avant les paquets (1) de la catégorie d'une deuxième plage de résistance plus élevée par rapport à la première plage de résistance.

17. Procédé selon la revendication 16, de préférence avant le chargement, un premier volume total des paquets (1) de la première catégorie et un deuxième volume total des paquets (1) de la deuxième catégorie, qui sont chargés dans l'ordre de chargement dans le récipient d'expédition (100), sont déterminés en fonction d'une compression prévue des paquets (1) de la deuxième catégorie lors du chargement des paquets (1) de la première catégorie sur les paquets (1) de la deuxième catégorie.

18. Procédé selon l'une des revendications précédentes, qui comprend, avant la détermination, l'introduction de la pluralité de paquets (1) et de préférence d'autres paquets (1), dans le dispositif de tri (2), dans lequel les paquets (1) sont entreposés dans le dispositif de tri (2) et la pluralité de paquets (1) n'est chargée, dans l'ordre de chargement, de préférence directement, dans le récipient d'expédition (100), que lorsque le chargement de la pluralité de paquets (1) permet de prévoir le chargement complet du récipient d'expédition (100).

19. Procédé selon la revendication 18, dans lequel le chargement complet de la station terminale (100) est prévu lorsque la pluralité de paquets (1) déterminée pour le chargement de la station terminale (100) présente, en tenant compte d'une densité prévue pour l'ordre de chargement déterminé, un volume de remplissage qui correspond ou s'approche d'une capacité de la station terminale (100).

20. Procédé selon l'une des revendications précédentes, dans lequel, avant le chargement de la station terminale (100), un état de chargement est saisi, dans lequel, de préférence, il est déterminé si la station terminale (100) est vide.

21. Procédé selon l'une des revendications précédentes, dans lequel, après le chargement de la station terminale (100), un état de chargement est déterminé, dans lequel, de préférence, il est déterminé si la station terminale (100) présente un état de remplissage de consigne, et dans lequel, plus particulièrement de préférence, lors d'un dépassement ou d'un passage en dessous de l'état de remplissage de consigne, un volume est déterminé, avec lequel l'état de remplissage de consigne est dépassé ou non.

22. Procédé selon la revendication 21, dans lequel, pour la détermination de l'état de chargement, une représentation de l'état de remplissage d'une ouverture de remplissage supérieure de la station terminale (100) est produite et la représentation de l'état de remplissage produite est comparée avec des images dans une base de données, auxquelles correspond un état de chargement, dans lequel, à chaque état de chargement correspond une somme de volumes pondérés de paquets (1) et/ou d'une pluralité de différents volumes pondérés de paquets (1) et/ou au moins une information dépendant du volume pour chacun des paquets (1) correspondant à l'état de chargement.

23. Procédé selon la revendication 22, qui comprend l'enregistrement de la représentation de l'état de remplissage produite dans la base de données, dans lequel, lors de l'enregistrement, à la représentation de l'état de remplissage est attribué l'état de chargement qui est attribué, lors de la comparaison, à l'image dans la base de données qui présente l'écart le plus faible par rapport à la représentation de l'état de remplissage.

24. Procédé selon la revendication 22 ou 23, dans lequel l'état de chargement déterminé à l'aide de la comparaison est comparé avec la somme des volumes pondérés des paquets (1) pris en charge dans la station terminale (100).

25. Procédé selon l'une des revendications 21 ou 22, qui comprend en outre l'adaptation continue ou itérative d'un algorithme pour la catégorisation des paquets (1), l'écart le plus faible déterminé lors de la comparaison étant pour cela minimisé à l'aide de la variation du facteur de pondération et grâce à l'utilisation d'un facteur de pondération modifié ainsi obtenu dans une autre étape de catégorisation d'un autre paquet (1), dans lequel l'adaptation de l'algorithme pour la catégorisation des paquets (1) a lieu de préférence par machine learning.

26. Procédé selon l'une des revendications précédentes, dans lequel la détermination d'au moins une information spécifique à l'objet comprend la détermination d'un endommagement d'au moins un des paquets (1), de préférence d'une enveloppe ou d'un emballage externe du paquet (1), dans lequel, lorsqu'un endommagement est déterminé pour au moins un des paquets (1), le paquet (1) correspondant est classé, lors de la catégorisation, dans une catégorie de paquets endommagés (1), dans lequel les paquets (1) de la catégorie de paquets endommagés (1) sont attribués, lors de la détermination de l'ordre de chargement, à une position finale dans l'ordre de chargement.
